# EUROPEAN PATENT APPLICATION

(11) **EP 3 758 190 A1**
(43) Date of publication of application: **30.12.2020**
(21) Application number: 19756538.5
(22) Date of filing: 18.01.2019
(51) Int. Cl.: H02J 15/00

(54) **COMPRESSED AIR ENERGY STORAGE AND POWER GENERATION DEVICE**

(30) Priority: 23.02.2018 JP 2018031187
(71) Applicant: Kabushiki Kaisha Kobe Seiko Sho (Kobe Steel, Ltd.), Kobe-shi, Hyogo 651-8585 (JP)
(72) Inventor: MATSUKUMA, Masaki, Takasago-shi, Hyogo 676-8670 (JP)
(74) Representative: TBK
(86) International application number: PCT/JP2019/001447
(87) International publication number: WO 2019/163347

(57) **Abstract**

A CAES power generation device 1 includes a compression/expansion/combined machine 10, a pressure accumulation unit 5 for storing compressed air, a low temperature water storage tank 7b and a high temperature water storage tank 7a, heat exchangers 41 to 43, and liquid maintaining units 46, 60, and 62. The compression/expansion/combined machine 10 has a function of compressing air using the electric power and a function of expanding the compressed air to generate electric power. The low temperature water storage tank 7b and the high temperature water storage tank 7a store liquid water and are fluidly connected to each other. The heat exchangers 41 to 43 exchange heat between the compressed air and the water. The liquid maintaining units 46, 60, and 62 pressurize the water flowing through the heat exchangers 41 to 43 and maintain the water in a liquid form.

## Description

### TECHNICAL FIELD

The present invention relates to a compressed air energy storage power generation device.

### BACKGROUND ART

The power generation using renewable energy such as wind power or sunlight produces output varying depending on weather. Therefore, a power plant using renewable energy such as a wind power plant or a solar power plant may be provided with an energy storage device in order to smooth the fluctuation in the power generation amount. As an example of such an energy storage device, a compressed air energy storage (CAES) power generation device is known.

Patent Document 1 discloses an adiabatic compressed air energy storage (ACAES) power generation device that recovers heat from compressed air before storing the compressed air and reheats the compressed air when the stored compressed air is supplied to the turbine. Since the ACAES power generation device recovers the compression heat and uses the compression heat during power generation, the ACAES power generation device has a higher power generation efficiency than a normal CAES power generation device. Hereinafter, the ACAES power generation device and the CAES power generation device are not distinguished from each other and are also simply referred to as CAES power generation devices.

### PRIOR ART DOCUMENT

### PATENT DOCUMENT

Patent Document 1: JP 2013-509530 A

### SUMMARY

### PROBLEMS TO BE SOLVED BY THE INVENTION

In the CAES power generation device of Patent Document 1, a liquid such as mineral oil, synthetic oil, or molten salt is adopted as a heating medium for recovering heat from compressed air. Since these heating mediums are liquids, but the compressed air is a gas, the densities of both fluids differ greatly. Therefore, in order to efficiently exchange heat, it is necessary to make the flow velocity of the heating medium extremely slower than the flow velocity of the compressed air. However, since the viscosity of the heating medium largely changes depending on the temperature, a biased flow of the heating medium may occur in the heat exchanger due to temperature unevenness occurring in the heat exchanger. In particular, when the flow velocity of the heating medium is extremely low, the degree of the biased flow also becomes large, and the desired heat exchange performance cannot be obtained.

The degree of the above-described biased flow also differs depending on the type of the heat exchanger. When a general-purpose plate heat exchanger is used from the viewpoint of cost reduction, a plurality of heating medium flow paths are formed in the plate heat exchanger, so that there occurs a variation in the flow velocity of the heating medium flowing through each heating medium flow path. That is, in a general-purpose plate heat exchanger, the degree of the biased flow may be further increased.

Alternatively, it is conceivable to use silicone oil having a small change in viscosity as the heating medium, but the silicone oil is expensive and not suitable for practical use. In addition, it is also conceivable to use an inexpensive solid heating medium such as brick or stone, but the solid heating medium cannot adjust the flow rate in the heat exchanger and is not preferable as the heating medium.

An object of the present invention is to prevent a deterioration in heat exchange performance due to biased flow in a compressed air energy storage power generation device at low cost.

### MEANS FOR SOLVING THE PROBLEMS

The present invention provides a compressed air energy storage power generation device including: an electric compressor configured to compress air using electric power; a pressure accumulation unit configured to store compressed air discharged from the electric compressor; an expansion generator configured to generate power by expanding the compressed air supplied from the pressure accumulation unit; a first water storage unit and a second water storage unit configured to store liquid water, and fluidly connected to each other; a first heat exchanger configured to exchange heat between the compressed air flowing from the electric compressor to the pressure accumulation unit and the water flowing from the first water storage unit to the second water storage unit, the first heat exchanger being configured to cool the compressed air and heat the water; a second heat exchanger configured to exchange heat between the compressed air flowing from the pressure accumulation unit to the expansion generator and the water flowing from the second water storage unit to the first water storage unit, the second heat exchanger being configured to heat the compressed air and cool the water; and a liquid maintaining unit configured to maintain the water in a liquid form by pressurizing the water flowing through the first heat exchanger and the second heat exchanger.

According to this configuration, when the electric power is surplus with respect to fluctuations in the electric energy generated by renewable energy and the like, the electric compressor is driven using the surplus electric power, and the compressed air is stored in the pressure accumulation unit. When the electric power is insufficient, the expansion generator is driven using the compressed air of the pressure accumulation unit to generate electric power. When the electric compressor is driven, since the temperature of the compressed air rises due to the compression heat, water is heated using the high temperature compressed air in the first heat exchanger, and the heated high temperature water is stored in the second water storage unit. In addition, when the expansion generator is driven, heating the compressed air supplied to the expansion generator using the high temperature water in the second water storage unit in the second heat exchanger improves expansion and power generation efficiency. As described above, in the above configuration, water is used as a heating medium. Unlike oil and the like, the viscosity of water does not substantially change depending on the temperature, so that a biased flow does not occur. However, if water is simply used as the heating medium, the water may boil and vaporize, and the heat exchange performance may be significantly reduced. Thus, pressurizing the water with the liquid maintaining unit maintains the water in a liquid form and achieves highly efficient heat exchange in the first heat exchanger and the second heat exchanger. In addition, since the flow rates in the first heat exchanger and the second heat exchanger can be easily regulated due to the water being in a liquid form, desired heat exchange performance can be obtained. Furthermore, water is much cheaper than another heating medium whose viscosity does not substantially change depending on temperature, such as silicone oil.

The liquid maintaining unit may pressurize the water so that a boiling point of the water flowing through the first heat exchanger is within a range of +20°C to +50°C with respect to a temperature of the compressed air supplied to the first heat exchanger.

According to this configuration, it is possible to prevent the water from boiling when the water is heated in the first heat exchanger. Setting the boiling point of water heated in the first heat exchanger to be higher than the temperature of the compressed air being the heat exchange counterpart by not less than +20°C makes it possible to prevent the temperature of water from reaching the boiling point during heat exchange. In addition, setting the boiling point to be higher than the temperature of the compressed air by not more than +50°C eliminates excessive pressurization, and the cost for pressurization can be reduced.

The compressed air energy storage power generation device may further include: a water amount regulating unit configured to regulate a flow rate of the water flowing through the first heat exchanger; and a control device configured to control the water amount regulating unit so that a temperature of the water after being heated in the first heat exchanger is within a range of -5°C to -20°C with respect to a temperature of the compressed air supplied to the first heat exchanger.

According to this configuration, since heat can be recovered from the compressed air to the water with high efficiency in the first heat exchanger, the high temperature water can be stored in the second water storage unit. In order to perform such highly efficient heat recovery, it is necessary to properly regulate the flow rates of compressed air and water in the first heat exchanger. That is, it is necessary to significantly slow down the flow velocity of the high-density liquid water with respect to the flow velocity of the low-density gaseous compressed air. Since the viscosity of water does not substantially change depending on the temperature, a biased flow does not occur even at a low flow velocity. Therefore, this highly efficient heat recovery can be achieved due to using the heating medium whose viscosity does not substantially change. In particular, water is significantly cheaper than the other heating mediums (such as silicone oil) whose viscosity does not change substantially. Therefore, highly efficient heat recovery can be achieved at low cost because liquid water is used as the heating medium.

The liquid maintaining unit may include: a pump configured to pressurize the water, a nitrogen tank fluidly connected to the first water storage unit and the second water storage unit, the nitrogen tank being configured to store high-pressure nitrogen; and a regulator configured to maintain a high pressure in the first water storage unit and a high pressure in the second water storage unit using nitrogen in the nitrogen tank so that the water in the first water storage unit and the water in the second water storage unit are maintained in a liquid form.

According to this configuration, since the pressure in the first water storage unit and the pressure in the second water storage unit are maintained at a high pressure using high pressure nitrogen, the power of the pump can be reduced compared to the case where the pressure of the water is maintained at a high pressure only by the power of the pump. Since the pressure is also properly controlled by the regulator, the water can be stably maintained in a liquid form. Here, the high-pressure nitrogen means nitrogen being at a high pressure to the extent that water can be maintained in a liquid form, and may be liquid nitrogen at room temperature, for example.

The electric compressor and the expansion generator may be an integrated compression/expansion/combined machine, and the first heat exchanger and the second heat exchanger may be a single heat exchanger.

According to this configuration, since the electric compressor and the expansion generator are an integrated compression/expansion/combined machine, the number of installed machines can be reduced as compared with the case where the electric compressor and the expansion generator are installed individually. Similarly, since the first heat exchanger and the second heat exchanger are also configured integratedly as a single heat exchanger, the number of installed machines can be reduced as compared with the case where the first heat exchanger and the second heat exchanger are installed individually. Therefore, a low-cost and small compressed air energy storage power generation device can be provided.

### EFFECT OF THE INVENTION

According to the present invention, since compressed air and liquid water are heat-exchanged in the compressed air energy storage power generation device, it is possible to prevent deterioration in heat exchange performance due to a biased flow at low cost.

### BRIEF DESCRIPTION OF THE DRAWINGS

Fig. 1 is a perspective view of a compressed air energy storage power generation device according to one embodiment of the present invention;
Fig. 2 is a schematic configuration diagram showing the configuration and the flow of air inside a first container;
Fig. 3 is a schematic configuration diagram showing the flow of water as a heating medium in the compressed air energy storage power generation device; and
Fig. 4 is a schematic configuration diagram of a compressed air energy storage power generation device showing a modified example of Fig. 3.

### MODE FOR CARRYING OUT THE INVENTION

In the following, embodiments of the present invention will be described with reference to the accompanying drawings.

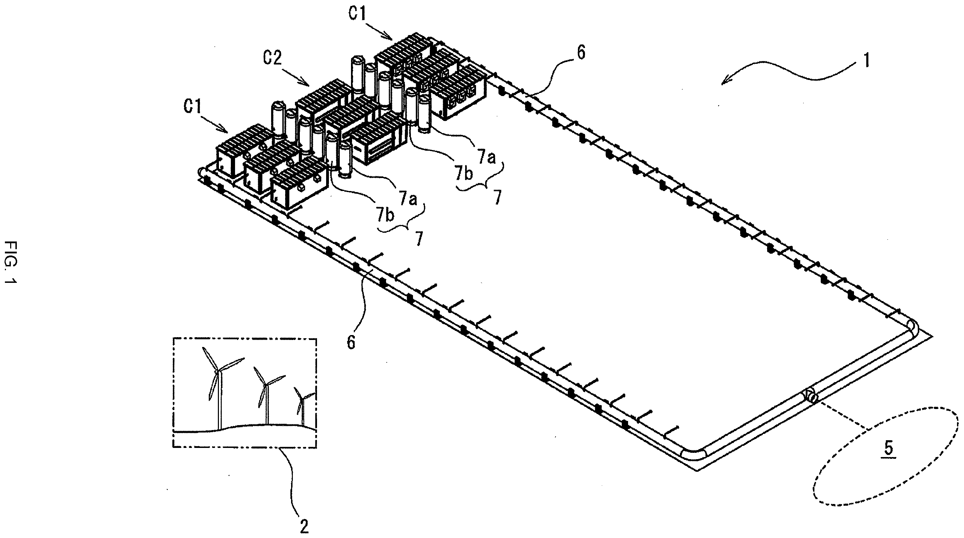

Referring to Fig. 1, a compressed air energy storage (CAES) power generation device 1 is electrically connected to a wind power plant 2. Since the power generation amount of the wind power plant 2 fluctuates depending on the weather and the like, the CAES power generation device 1 is provided as an energy storage device for smoothing the fluctuating power generation amount. However, the wind power plant 2 is an example of a facility in which power generation amount fluctuates, using renewable energy or the like.

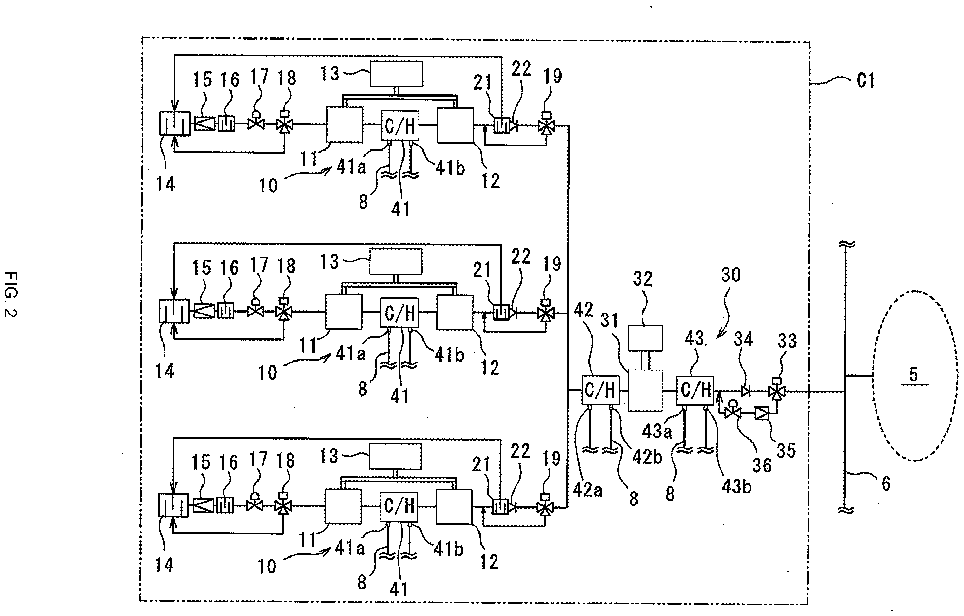

The CAES power generation device 1 includes a first container C1 for accommodating mechanical parts and the like, a second container C2 for accommodating electric parts and the like, and a pressure accumulation unit 5 and a water storage unit 7 arranged outside these containers. The first container C1 and the pressure accumulation unit 5 are connected via an air pipe 6. The water storage unit 7 is connected to the first container C1 and the second container C2 via a heating medium pipe 8 (see Fig. 2). The first containers C1 are arranged side by side in two rows along the air pipe 6. The second containers C2 are arranged in one row in the same direction as the first container C1 between the two rows of the first containers C1. In Fig. 1, the illustration of a part of the CAES power generation device 1 is omitted in order to prevent the illustration from becoming complicated.

The pressure accumulation unit 5 is conceptually shown in Fig. 1. Compressed air is stored in the pressure accumulation unit 5. The mode of the pressure accumulation unit 5 is not particularly limited as long as the pressure accumulation unit 5 can store compressed air, and the pressure accumulation unit 5 may be, for example, a steel tank. The pressure accumulation unit 5 is fluidly connected to the compression/expansion/combined machine 10 (see Fig. 2) and the high-pressure stage machine 30 (see Fig. 2) in the first container C1 via an air pipe 6 as described below.

Between the first container C1 and the second container C2, a high temperature water storage tank (second water storage unit) 7a and a low temperature water storage tank (first water storage unit) 7b are arranged as the water storage unit 7. Liquid water is stored in the high temperature water storage tank 7a and the low temperature water storage tank 7b. The water stored in the high temperature water storage tank 7a has a relatively higher temperature than the water stored in the low temperature water storage tank 7b. The high temperature water storage tank 7a and the low temperature water storage tank 7b are not particularly limited as long as they can store liquid water, and may be steel tanks, for example. One high temperature water storage tank 7a and one low temperature water storage tank 7b are provided for one first container C1. In the present embodiment, water as a heating medium flows between one high temperature water storage tank 7a, one low temperature water storage tank 7b, and one first container C1. These form one closed heating medium system.

The inside of the first container C1 and the air flow path will be described with reference to Fig. 2.

In the present embodiment, three compression/expansion/combined machines 10, one high-pressure stage machine 30, and five heat exchangers 41 to 43 are accommodated as machine parts in the first container C1. The three compression/expansion/combined machines 10 denoted by the same reference numerals are the same, and similarly the three heat exchangers 41 denoted by the same reference numerals are also the same. Hereinafter, similarly, the components denoted by the same reference numerals indicate that the components are the same.

The compression/expansion/combined machine 10 is of a two-stage screw type. The compression/expansion/combined machine 10 includes a low-pressure stage rotor unit 11, a high-pressure stage rotor unit 12, and a motor generator 13 mechanically connected to the low-pressure stage rotor unit 11 and the high-pressure stage rotor unit 12. Each of the low-pressure stage rotor unit 11 and the high-pressure stage rotor unit 12 has a pair of male and female screw rotors, and is a portion that compresses and expands air. The motor generator 13 has a function as an electric motor or a function as a generator, and these can be switched and used.

The heat exchangers 41 to 43 also have a function as a cooler for cooling the compressed air or a function as a heater for heating the compressed air, and these can be switched and used. The heat exchangers 41 to 43 are, for example, of a general-purpose plate type, and each include first ports 41a to 43a and second ports 41b to 43b. Alternatively, the modes of the heat exchangers 41 to 43 can be modes other than the plate type such as fin-tube heat exchangers and shell-and-tube heat exchangers. As will be described below in detail, when the heat exchangers 41 to 43 function as coolers for cooling compressed air, low temperature water flows into the first ports 41a to 43a, and high temperature water after heat exchange flows out from the second ports 41b to 43b. When the heat exchangers 41 to 43 function as heaters for heating compressed air, high temperature water flows into the second ports 41b to 43b and low temperature water flows out from the first ports 41a to 43a.

The compression/expansion/combined machine 10 also includes an exhaust silencer 14, an intake filter 15, an intake silencer 16, an intake regulating valve 17, a three-way valve 18, a discharge silencer 21, a check valve 22, and a three-way valve 19. The exhaust silencer 14, the intake filter 15, the intake silencer 16, the intake regulating valve 17, the three-way valve 18, the low-pressure stage rotor unit 11, the heat exchanger 41, the high-pressure stage rotor unit 12, the discharge silencer 21, the check valve 22, and the three-way valve 19 are arranged in this order from the atmosphere in the air flow. It should be noted that switching the three-way valve 18 allows air to pass through or bypass the intake filter 15, the intake silencer 16, and the intake regulating valve 17, and switching the three-way valve 19 allows air to pass through or bypass the discharge silencer 21 and the check valve 22.

The compression/expansion/combined machine 10 has a function of compressing air using the electric power generated by the wind power plant 2 (see Fig. 1) and a function of expanding the compressed air to generate electric power. Therefore, the compression/expansion/combined machine 10 can be used by switching between a compressor and an expander. The compression/expansion/combined machine 10 is used within a pressure range of, for example, about 1 MPa. Specifically, air at atmospheric pressure is taken in, compressed to about 1 MPa and discharged, or compressed air of about 1 MPa is supplied, expanded to atmospheric pressure, and exhausted. In the present embodiment, three compression/expansion/combined machines 10 are fluidly connected in parallel to one high-pressure stage machine 30.

When the compression/expansion/combined machine 10 operates as a compressor, the motor generator 13 operates as an electric motor (motor). At this time, using the electric power from the wind power plant 2, the motor generator 13 rotates the low-pressure stage rotor unit 11 and the high-pressure stage rotor unit 12 to compress the air. Specifically, air is taken into the low-pressure stage rotor unit 11 from the atmosphere. At this time, the intake filter 15 removes dust, the intake silencer 16 silences the intake noise, and the intake regulating valve 17 regulates the intake amount. The air whose intake amount is regulated is compressed in the low-pressure stage rotor unit 11 and cooled in the heat exchanger 41, the cooled air is further compressed in the high-pressure stage rotor unit 12, and the compressed air is discharged toward the high-pressure stage machine 30. At this time, the discharge silencer 21 silences the discharge noise, and the check valve 22 prevents backflow.

When the compression/expansion/combined machine 10 operates as an expander, the motor generator 13 operates as a generator. At this time, the low-pressure stage rotor unit 11 and the high-pressure stage rotor unit 12 are supplied with compressed air and expand the compressed air to be driven to rotate. The motor generator 13 receives power from the low-pressure stage rotor unit 11 and the high-pressure stage rotor unit 12 to generate electricity. Specifically, the discharge silencer 21 and the check valve 22 are bypassed from the three-way valve 19, and compressed air is supplied to the high-pressure stage rotor unit 12 from the high-pressure stage machine 30. Then, the compressed air is expanded in the high-pressure stage rotor unit 12, which drives the motor generator 13. The compressed air expanded here is heated in the heat exchanger 41 and is supplied to the low-pressure stage rotor unit 11. The low-pressure stage rotor unit 11 further expands the compressed air, which drives the motor generator 13. The air expanded here bypasses the intake regulating valve 17, the intake silencer 16, and the intake filter 15 from the three-way valve 18, and is exhausted to the atmosphere through the exhaust silencer 14. At this time, the exhaust silencer 14 silences the exhaust noise.

The high-pressure stage machine 30 is a single-stage screw type driven at a higher pressure than the driving pressure of the compression/expansion/combined machine 10. The high-pressure stage machine 30 includes a rotor unit 31 and a motor generator 32 mechanically connected to the rotor unit 31. The rotor unit 31 has a pair of male and female screw rotors, and is a portion that compresses and expands air. The motor generator 14a can be used by switching between the function as an electric motor and the function as a generator. In addition, the high-pressure stage machine 30 includes a three-way valve 33, a check valve 34 connected in parallel, an air supply filter 35, and an air supply regulating valve 36. The three-way valve 33 is connected to an air pipe 6 extending to the pressure accumulation unit 5. It should be noted that switching the three-way valve 33 allows air to pass through or bypass the check valve 34.

In the present embodiment, the high-pressure stage machine 30 is a compression/expansion/combined machine that has a function of compressing air using the electric power generated by the wind power plant 2 and a function of expanding the compressed air to generate electric power, similarly to the compression/expansion/combined machine 10. Therefore, the high-pressure stage machine 30 can be used by switching between a compressor and an expander. The high-pressure stage machine 30 is used in a pressure range of, for example, for example, about 1 MPa or more and about 2 MPa or less. Specifically, compressed air of about 1 MPa is taken in, compressed to about 2 MPa, and discharged, or compressed air of about 2 MPa is supplied, expanded to about 1 MPa, and exhausted.

When the high-pressure stage machine 30 operates as a compressor, the motor generator 32 operates as an electric motor (motor). At this time, using the electric power from the wind power plant 2, the motor generator 32 rotates the rotor unit 31 to compress the air. Specifically, the compressed air discharged from the compression/expansion/combined machine 10 is cooled in the heat exchanger 42, and the compressed air is further compressed in the rotor unit 31. Then, the compressed air is cooled in the heat exchanger 43 and discharged toward the pressure accumulation unit 5 through the air pipe 6. At this time, the check valve 34 prevents backflow.

When the high-pressure stage machine 30 operates as an expander, the motor generator 32 operates as a generator. At this time, the rotor unit 31 is supplied with compressed air and expands the compressed air to be driven to rotate. The motor generator 32 receives power from the rotor unit 31 to generate power. Specifically, the check valve 34 is bypassed from the three-way valve 33, the air supply filter 35 removes dust, and the air supply regulating valve 36 regulates the air supply amount. Then, the compressed air is heated in the heat exchanger 43, the compressed air is supplied to the rotor unit 31, the compressed air is expanded, and the motor generator 32 is driven. The air expanded here is heated in the heat exchanger 42 and supplied to the compression/expansion/combined machine 10.

It should be noted that the compression/expansion/combined machine 10 of the present embodiment constitutes the electric compressor and expansion generator of the present invention, and the high-pressure stage machine 30 of the present embodiment also constitutes the electric compressor and expansion generator of the present invention. In addition, the heat exchangers 41 to 43 constitute the first heat exchanger and the second heat exchanger of the present invention.

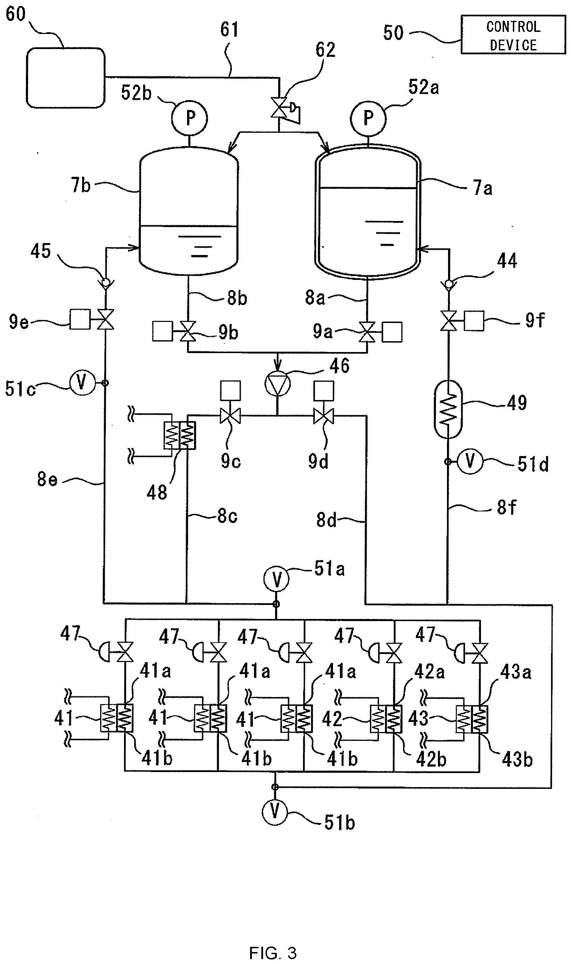

A flow path of water as a heating medium will be described with reference to Fig. 3.

In the present embodiment, the high temperature water storage tank 7a, the low temperature water storage tank 7b, and the heat exchangers 41 to 43 are fluidly connected to each other via the heating medium pipes 8 (8a to 8f). Water as a heating medium flows in the heating medium pipe 8. The water in the heating medium pipe 8 is caused to flow by a pump 46, and in the present embodiment, the pump 46 is accommodated in the second container C2.

The heating medium pipe 8a extends from the high temperature water storage tank 7a, and the heating medium pipe 8b extends from the low temperature water storage tank 7b. The heating medium pipe 8a and the heating medium pipe 8b are connected to the pump 46. From the pump 46, the heating medium pipes 8c and 8d are extended in a divided manner. One heating medium pipe 8c is connected to the first ports 41a to 43a of the heat exchangers 41 to 43, and the other heating medium pipe 8d is connected to the second ports 41b to 43b of the heat exchangers 41 to 43. In addition, a heating medium pipe 8e extends from the first ports 41a to 43a of the heat exchangers 41 to 43 to the low temperature water storage tank 7b. A heating medium pipe 8f extends from the second ports 41b to 43b of the heat exchangers 41 to 43 to the high temperature water storage tank 7a. It should be noted that each of the heating medium pipes 8a and 8b, the heating medium pipes 8c and 8d, the heating medium pipes 8c and 8e, and the heating medium pipes 8d and 8f shares a part.

In the heating medium pipes 8a to 8f, shutoff valves 9a to 9f capable of allowing or blocking the flow of water are respectively interposed. In addition, a check valve 44 is attached to the heating medium pipe 8f, and a check valve 45 is attached to the heating medium pipe 8e. The flow of water in the heating medium pipes 8f and 8e is regulated in one direction by the check valves 44 and 45, and the water is made to flow in the directions of supplying water to each of the high temperature water storage tank 7a and the low temperature water storage tank 7b.

In the heating medium pipe 8c (the part shared with 8e), a flow rate regulating valve 47 is interposed. One flow rate regulating valve 47 is provided for each of the heat exchangers 41 to 43. Regulating the opening degree of the flow rate regulating valve 47 or the rotational speed of the pump 46 allows the flow rate of water in each of the heat exchangers 41 to 43 to be regulated. Therefore, the temperatures of water and compressed air obtained after heat exchange in each of the heat exchangers 41 to 43 can be regulated. Thus, the pump 46 and the flow rate regulating valve 47 constitute the water amount regulating unit of the present invention.

In the heating medium pipe 8c, a cooler 48 for cooling water as a heating medium is interposed. The cooler 48 can supply water having a constant low temperature to the heat exchangers 41 to 43. The mode of the cooler 48 is not particularly limited, but may be, for example, an electric freezer.

In the heating medium pipe 8f, an electric heater 49 for heating water as a heating medium is interposed. When water cannot be heated to the desired temperature in the heat exchangers 41 to 43, the water may be further heated using the electric heater 49.

In the present embodiment, flow rate sensors 51a and 51b are provided for measuring the flow rate of water flowing into the heat exchangers 41 to 43 and the flow rate of water flowing out of the heat exchangers 41 to 43. In other words, the flow rate sensors 51a and 51b measure the flow rates of water flowing out of the high temperature water storage tank 7a and the low temperature water storage tank 7b, respectively. In addition, flow rate sensors 51c and 51d for respectively measuring the flow rates of water flowing into the high temperature water storage tank 7a and the low temperature water storage tank 7b are also provided. In addition, a pressure sensor 52a for measuring the internal pressure of the high temperature water storage tank 7a and a pressure sensor 52b for measuring the internal pressure of the low temperature water storage tank 7b are also provided. The measurement value of each of the sensors 51a to 51d, 52a, and 52b is sent to the control device 50 described below.

When air is compressed by the compression/expansion/combined machine 10 (see Fig. 2) and the high-pressure stage machine 30 (see Fig. 2), the shutoff valves 9b, 9c, and 9f are opened and the shutoff valves 9a, 9d, and 9e are closed. In this state, water flows out of the low temperature water storage tank 7b through the heating medium pipe 8a; and this water flows through the heating medium pipe 8c, is cooled to a constant low temperature (for example, about 30°C) in the cooler 48, and then supplied to the first ports 41a to 43a of the heat exchangers 41 to 43.

In the heat exchangers 41 to 43, the compressed air is cooled and the water is heated. For example, compressed air of about 190°C and water of about 30°C exchange heat to become compressed air of about 40°C and water of about 180°C. At this time, the water flowing through the heat exchangers 41 to 43 is pressurized by the pump 46 or the like to a pressure that the water is maintained in a liquid state without being boiled even at 180°C. In the present embodiment, the pressure of this water is maintained to a pressure at which boiling does not occur even at +30°C (that is, about 220°C) with respect to the temperature of compressed air supplied to the heat exchangers 41 to 43 (about 190°C). Preferably, the water pressure is maintained so that the boiling point of water is within the range of +20°C to +50°C with respect to the temperature of the compressed air supplied to the heat exchangers 41 to 43. In this way, the water flowing through the heat exchangers 41 to 43 is maintained in a liquid form. The water heated in the heat exchangers 41 to 43 is supplied to and stored in the high temperature water storage tank 7a through the heating medium pipe 8f. Preferably, the high temperature water storage tank 7a is thermally insulated so that the stored high temperature water does not dissipate heat into the atmosphere.

Preferably, the control device 50 controls the amount of water supplied to the heat exchangers 41 to 43 so that the temperature of the water heated in the heat exchangers 41 to 43 is within the range of -5°C to -20°C with respect to the temperature of the compressed air supplied to the heat exchangers 41 to 43. Specifically, in the present embodiment, the control device 50 regulates the rotational speed of the pump 46 and the opening degree of the flow rate regulating valve 47 in order to regulate the water amount. It should be noted that the temperature of the compressed air supplied to the heat exchangers 41 to 43 and the temperature of the water flowing out of the heat exchangers 41 to 43 may be actually measured by installing a temperature sensor, or may be calculated in advance from the performance or the like of the electric compressor. In any case, in the heat exchangers 41 to 43, water having a temperature approximately the same as that of the compressed air being the heating source (-5°C to -20°C) can be obtained, that is, highly efficient heat exchange can be achieved.

When air is expanded by the compression/expansion/combined machine 10 (see Fig. 2) and the high-pressure stage machine 30 (see Fig. 2), the shutoff valves 9a, 9d, and 9e are opened and the shutoff valves 9b, 9c, and 9f are closed. In this state, water flows out of the high temperature water storage tank 7a through the heating medium pipe 8a, and this water flows through the heating medium pipe 8d and is supplied to the first ports 41b to 43b of the heat exchangers 41 to 43. At this time, in the heat exchangers 41 to 43, the compressed air is heated and the water is cooled. For example, in the heat exchangers 41 to 43, the compressed air of about 20°C and the water of about 180°C exchange heat with each other to become the compressed air of about 170°C and the water of about 50°C. Similarly to the above, since the water flowing through the heat exchangers 41 to 43 is pressurized by the pump 46 or the like to a pressure of maintaining a liquid state without boiling even at 180°C, the water flowing through the heat exchangers 41 to 43 is maintained in a liquid state. The water cooled in the heat exchangers 41 to 43 is supplied to and stored in the low temperature water storage tank 7b through the heating medium pipe 8e.

In the present embodiment, a nitrogen tank 60 storing high pressure nitrogen is fluidly connected to the high temperature water storage tank 7a and the low temperature water storage tank 7b via a nitrogen pipe 61. In the nitrogen pipe 61, a pressure regulator (hereinafter, simply referred to as regulator) 62 is interposed. In order that regulating the opening pressure of the regulator 62 maintains the water in the high temperature water storage tank 7a and the water in the low temperature water storage tank 7b in a liquid form, the pressure of the low temperature water storage tank 7b and the pressure of the high temperature water storage tank 7a are maintained at a high pressure using nitrogen in the nitrogen tank 60. Therefore, in the present embodiment, the water is maintained in a liquid form by the pump 46, the regulator 62, and the nitrogen tank 60, and these constitute the liquid maintaining unit of the present invention. However, the nitrogen tank 60 and the regulator 62 may be omitted if necessary.

Although not shown in detail in the drawing, an inverter, a converter, a braking resistor, a control device 50, and the like are accommodated in the second container C2 as electrical components. The control device 50 controls each unit of the CAES power generation device 1. The control device 50 receives data on the electric energy requested from a factory or the like (not shown) and the power generation amount of the wind power plant 2. Depending on these differences, it is determined whether the power generation amount of the wind power plant 2 is surplus or insufficient. Based on the determination, the compression/expansion/combined machine 10 and the high-pressure stage machine 30 are switched between compression and expansion. The control device 50 can also regulate the rotational speed of the compression/expansion/combined machine 10 and the high-pressure stage machine 30, regulate the rotational speed of the pump 46, and the like.

The CAES power generation device 1 of the present embodiment has the following advantages.

When the electric power is surplus with respect to fluctuations in the electric energy generated in the wind power plant 2, the compression/expansion/combined machine 10 is driven as a compressor using the surplus electric power, and the compressed air is stored in the pressure accumulation unit 5. When the electric power is insufficient, the compression/expansion/combined machine 10 is driven as an expander using the compressed air of the pressure accumulation unit 5 to generate electric power. When the compression/expansion/combined machine 10 is driven as a compressor, since the temperature of the compressed air rises due to the compression heat, water is heated using the high temperature compressed air in the heat exchangers 41 to 43, and the heated high temperature water is stored in the high temperature water storage tank 7a. In addition, when the compression/expansion/combined machine 10 is driven as an expander, heating the compressed air supplied to the compression/expansion/combined machine 10 using the high temperature water in the high temperature water storage tank 7a in the heat exchangers 41 to 43 improves expansion and power generation efficiency. As described above, in the above configuration, water is used as a heating medium. Unlike oil and the like, the viscosity of water does not substantially change depending on the temperature, so that even if temperature unevenness occurs in the heat exchangers 41 to 43, a biased flow does not occur in the heat exchangers 41 to 43. However, if water is simply used as the heating medium, the water may boil and vaporize, and the heat exchange performance may be significantly reduced. Thus, maintaining the water at a high pressure with the liquid maintaining unit maintains the water in a liquid form and achieves highly efficient heat exchange in the heat exchangers 41 to 43. In addition, since the flow rates in the heat exchangers 41 to 43 can be easily regulated due to the water being in a liquid form, desired heat exchange performance can be obtained. Furthermore, water is much cheaper than another heating medium whose viscosity does not substantially change depending on temperature, such as silicone oil.

Since the water is maintained at a high pressure by the liquid maintaining unit, it is possible to prevent the water from boiling when the water is heated by the heat exchangers 41 to 43. In particular, setting the boiling point of water heated in the heat exchangers 41 to 43 to be higher than the temperature of the compressed air being the heat exchange counterpart by not less than +20°C makes it possible to prevent the temperature of water from reaching the boiling point during heat exchange, and to keep the vaporization rate below a certain level. In addition, setting the boiling point to be higher than the temperature of the compressed air by not more than +50°C eliminates excessive pressurization, and the cost for pressurization can be reduced.

Since the control device 50 can control the water amount regulating unit to regulate the temperature of the water after heat exchange, the heat exchangers 41 to 43 can recover heat from the compressed air to the water with high efficiency, and the high temperature water can be stored in the high temperature water storage tank 7a. In order to perform such highly efficient heat recovery, it is necessary to properly regulate the flow rates of compressed air and water in the heat exchangers 41 to 43. That is, it is necessary to significantly slow down the flow velocity of the high-density liquid water with respect to the flow velocity of the low-density gaseous compressed air. Since the viscosity of water does not substantially change depending on the temperature, a biased flow does not occur even at a low flow velocity. Therefore, this highly efficient heat recovery can be achieved due to using the heating medium whose viscosity does not substantially change. In particular, water is significantly cheaper than the other heating mediums (such as silicone oil) whose viscosity does not change substantially. Therefore, highly efficient heat recovery can be achieved at low cost because liquid water is used as the heating medium.

Since not only the pump 46 but also the nitrogen tank 60 and the regulator 62 are provided as the liquid maintaining unit, and the pressure of the low temperature water storage tank 7b and the pressure of the high temperature water storage tank 7a are maintained at a high pressure using high pressure nitrogen, the power of the pump 46 can be reduced compared to the case where the water is maintained at a high pressure only by the power of the pump 46. Since the pressure is also properly controlled by the regulator 62, the water can be stably maintained in a liquid form. Here, the high-pressure nitrogen means nitrogen being at a high pressure to the extent that water can be maintained in a liquid form, and may be liquid nitrogen at room temperature, for example.

Since the compression/expansion/combined machine 10 serves both as the electric compressor and the expansion generator of the present invention, the number of installed machines can be reduced as compared with the case where the electric compressor and the expansion generator are installed individually. Similarly, since the heat exchangers 41 to 43 serve both as the first heat exchanger and the second heat exchanger of the present invention, the number of installed machines can be reduced as compared with the case where the first heat exchanger and the second heat exchanger are installed individually. Therefore, a low-cost and small CAES power generation device 1 can be provided.

In the present embodiment, an example of using the compression/expansion/combined machine 10 in which the electric compressor and the expansion generator of the present invention are integrated has been described, but the electric compressor and the expansion generator may be individually and separately provided. Similarly, an example of using the heat exchangers 41 to 43 in which the first heat exchanger and the second heat exchanger of the present invention are integrated has been described, but the first heat exchanger and the second heat exchanger may be individually and separately provided. Specifically, in the first heat exchanger, heat may be exchanged between the compressed air flowing from the electric compressor to the pressure accumulation unit 5 and the water flowing from the low temperature water storage tank 7b to the high temperature water storage tank 7a, the compressed air may be cooled, and the water may be heated. In the second heat exchanger, heat may be exchanged between the compressed air flowing from the pressure accumulation unit 5 to the expansion generator and the water flowing from the high temperature water storage tank 7a to the low temperature water storage tank 7b, the compressed air may be heated, and the water may be heated.

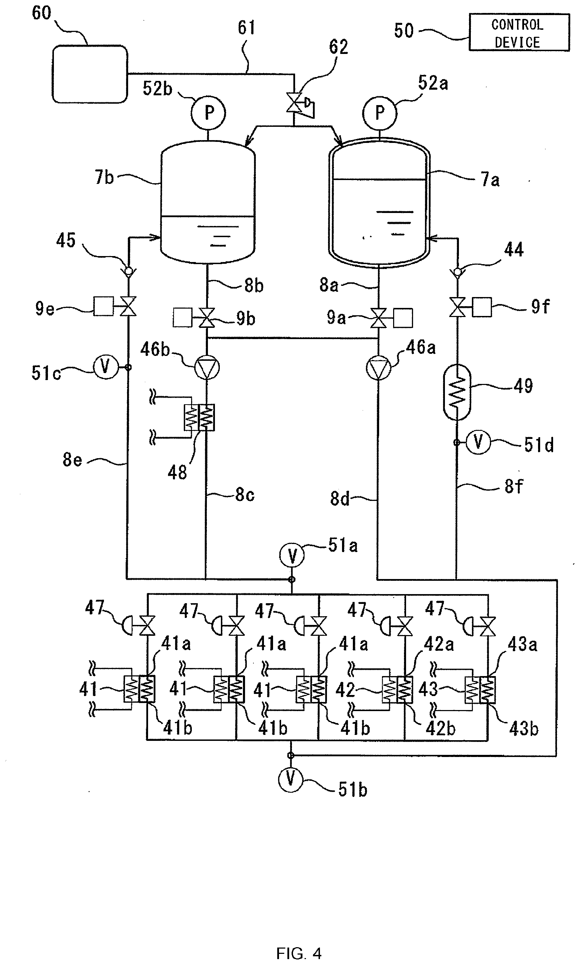

As described above, although the specific embodiment of the present invention is described, the present invention is not limited to the above-described embodiment, and can be implemented with various modifications within the scope of the present invention. For example, in the above embodiment, providing the pump 46 and the shutoff valve 9d between the shutoff valve 9a and the heating medium pipe 8d and providing the pump 46 and the shutoff valve 9c between the shutoff valve 9b and the heating medium pipe 8c illustrate the pump 46 as a single pump. However, the present invention is not limited to this, and as shown in Fig. 4, providing the pump 46a between the shutoff valve 9a and the heating medium pipe 8d and providing another pump 46b different from the pump 46a between the shutoff valve 9b and the heating medium pipe 8c allow the shutoff valve 9c and the shutoff valve 9d to be omitted.

In addition, in the above embodiment, examples of power generation by renewable energy and the like include wind power generation, but in addition to this, all of the power generation which uses irregularly fluctuating energy and is constantly or repeatedly supplemented by natural power such as sunlight, solar heat, wave power, tidal power, running water, or tidal power can be targeted. Furthermore, in addition to renewable energy, all of those in which the power generation amount fluctuates, such as factories having power generation facilities that operate irregularly can be targeted.

### DESCRIPTION OF SYMBOLS

1 Compressed air energy storage (CAES) power generation device
2 Wind power plant
5 Pressure accumulation unit
6 Air pipe
7 Water storage unit
7a High temperature water storage tank (second water storage unit)
7b Low temperature water storage tank (first water storage unit)
8, 8a to 8f Heating medium pipe
9a to 9f Shutoff valve
10 Compression/expansion/combined machine (electric compressor, expansion generator)
11 Low-pressure stage rotor unit
12 High-pressure stage rotor unit
13 Motor generator
14 Exhaust silencer
15 Intake filter
16 Intake silencer
17 Intake regulating valve
18, 19 Three-way valve
21 Discharge silencer
22 Check valve
30 High-pressure stage machine (electric compressor, expansion generator)
31 Rotor unit
32 Motor generator
33 Three-way valve
34 Check valve
35 Air supply filter
36 Air supply regulating valve
41, 42, 43 Heat exchanger (first heat exchanger, second heat exchanger)
41a to 43a First port
41b to 43b Second port
44, 45 Check valve
46, 46a, 46b Pump (liquid maintaining unit) (water amount regulating unit)
47 Flow rate regulating valve (water amount regulating unit)
48 Cooler
49 Electric heater
50 Control device
51a to 51d Flow rate sensor
52a, 52b Pressure sensor
60 Nitrogen tank (liquid maintaining unit)
61 Nitrogen pipe
62 Regulator (liquid maintaining unit)
C1 First container
C2 Second container

## Claims

1. A compressed air energy storage power generation device comprising:
an electric compressor configured to compress air using electric power;
a pressure accumulation unit configured to store compressed air discharged from the electric compressor;
an expansion generator configured to generate power by expanding the compressed air supplied from the pressure accumulation unit;
a first water storage unit and a second water storage unit configured to store liquid water, and fluidly connected to each other;
a first heat exchanger configured to exchange heat between the compressed air flowing from the electric compressor to the pressure accumulation unit and the water flowing from the first water storage unit to the second water storage unit, the first heat exchanger being configured to cool the compressed air and heat the water;
a second heat exchanger configured to exchange heat between the compressed air flowing from the pressure accumulation unit to the expansion generator and the water flowing from the second water storage unit to the first water storage unit, the second heat exchanger being configured to heat the compressed air and cool the water; and
a liquid maintaining unit configured to maintain the water in a liquid form by pressurizing the water flowing through the first heat exchanger and the second heat exchanger.

2. The compressed air energy storage power generation device according to claim 1, wherein the liquid maintaining unit pressurizes the water so that a boiling point of the water flowing through the first heat exchanger is within a range of +20°C to +50°C with respect to a temperature of the compressed air supplied to the first heat exchanger.

3. The compressed air energy storage power generation device according to claim 1 or 2, further comprising:
a water amount regulating unit configured to regulate a flow rate of the water flowing through the first heat exchanger; and
a control device configured to control the water amount regulating unit so that a temperature of the water after being heated in the first heat exchanger is within a range of -5°C to -20°C with respect to a temperature of the compressed air supplied to the first heat exchanger.

4. The compressed air energy storage power generation device according to claim 1 or 2, wherein the liquid maintaining unit includes:
a pump configured to pressurize the water;
a nitrogen tank fluidly connected to the first water storage unit and the second water storage unit, the nitrogen tank being configured to store high-pressure nitrogen; and
a regulator configured to maintain a high pressure in the first water storage unit and a high pressure in the second water storage unit using nitrogen in the nitrogen tank so that the water in the first water storage unit and the water in the second water storage unit are maintained in a liquid form.

5. The compressed air energy storage power generation device according to claim 1 or 2,
wherein the electric compressor and the expansion generator are an integrated compression/expansion/combined machine, and
wherein the first heat exchanger and the second heat exchanger are a single heat exchanger.
